Europäisches Patentamt

European Patent Office

Office européen des brevets

(11) Veröffentlichungsnummer: **0 510 407 A2**

# (12) EUROPÄISCHE PATENTANMELDUNG

(21) Anmeldenummer: **92105753.5**

(22) Anmeldetag: **03.04.92**

(51) Int. Cl.5: **B29C 67/22**

(30) Priorität: **26.04.91 DE 4113658**

(43) Veröffentlichungstag der Anmeldung:
**28.10.92 Patentblatt 92/44**

(84) Benannte Vertragsstaaten:
**BE DE ES FR GB IT NL**

(71) Anmelder: **ELASTOGRAN POLYURETHANE
GMBH
Landwehrweg
W-2844 Lemförde(DE)**

(72) Erfinder: **Dimperl, Peter
Stilfser-Joch-Strasse 2
W-8000 Muenchen 90(DE)**
Erfinder: **Lisker, Norbert
Buergermeister-Schwaiger-Strasse 15
W-8190 Wolfratshausen(DE)**
Erfinder: **Schumacher, Wolfgang
Hauptstrasse 198
W-8014 Neubiberg(DE)**

(74) Vertreter: **Langfinger, Klaus-Dieter, Dr. et al
BASF AG Carl-Bosch-Strasse 38
W-6700 Ludwigshafen(DE)**

(54) **Verfahren und Vorrichtung zum Ausschäumen von geschlossenen Kassetten mit Mehrkomponenten-Kunststoff, insbesondere Polyurethan.**

(57) Das Verfahren und die Vorrichtung zum Ausschäumen von geschlossenen Kassetten, die durch ein festen Rahmen (2, 3) und obere und untere flexible Deckschichten (4, 5) gebildet werden, erfolgt in einer Doppelbandanlage (8). Eine Bewegung gegen die Transportrichtung der Düse (10) für den Schaumaustrag aus der Mischvorrichtung oder eine Zwangsunterbrechung dieses Schaumaustrages verhindern im wesentlichen eine Benetzung des Querbalkens (3) der Kassette, wobei eine Schutzabdeckung (11) auch eine Verschmutzung des Querbalkens sicher verhindert. Je nachdem, ob die Düse gegen die Transportrichtung bewegbar ist oder lediglich eine Unterbrechung des Schaumaustritts bei stillstehender Düse erfolgt, ist die Schutzabdeckung ortsfest bzw. in Transportrichtung mit der Kassette beim Passieren eines Querbalkens synchron mitbewegbar. Die Steuerung der Schutzabdeckung erfolgt so, daß diese den normalen Schaumeintrag in die Kassette nicht behindert.

# FIG. 3

Die Erfindung betrifft ein Verfahren und eine Vorrichtung nach dem Oberbegriff des Patentanspruchs 1.

Derartige Kassetten, beispielsweise Türen und Wände, die aus einem Rahmen und zwei durch die Deckschichten gebildete Außenflächen bestehen, werden nach bekannten Verfahren diskontinuierlich in sog. Pressenanlagen hergestellt. Hierbei werden die Rahmen, zusammen mit der oberen und unteren Deckschicht, als vorbereitete Kassette, einzeln in die Presse eingelegt, dann wird die Presse geschlossen und anschließend erfolgt das Ausschäumen des Hohlraums. Nach dem Aufschäumen und Aushärten des Mehrkomponenten-Kunststoffes wird das entsprechende fertige Kassettenprodukt entnommen. Diese Arbeitsweise ist sehr aufwendig und läßt nur eine geringe Anlagenleistung zu.

Für die Verarbeitung von Polyurethan sind sog. Doppelbandanlagen in den unterschiedlichsten Ausgestaltungen bekannt. Beispielsweise werden in solchen Doppelbandanlagen, die aus einem oberen und einem unteren Förderband bestehen, endlose Schaumstoffstränge hergestellt, die oben und unten mit festen oder flexiblen Deckschichten kaschiert sind und seitlich durch mitgeführte oder zum Doppelband gehörende ortsfeste Seitenabdeckungen begrenzt werden. Nach dem Austreten aus dem Doppelband wird der erzeugte und kaschierte Schaumstoffstrang dann entsprechend durch Sägen oder dergleichen in der gewünschten Länge abgelängt. Das Aufschäumen erfolgt in dem Formhohlraum zwischen den beiden Förderbändern. Die Mischvorrichtung ist vor oder am Einlauf der Doppelbandanlage angeordnet. Entweder weist die Mischvorrichtung eine Breitschlitzdüse auf oder sie ist quer zur Förderrichtung oszillierend bewegbar, um sicherzustellen, daß die ganze Breite des Förderbandes mit Kunststoffgemisch benetzt wird.

Wenn Kassetten der vorstehend genannten Art hergestellt werden sollen, so weisen diese nicht nur Seitenbalken, sondern auch Querbalken auf, die den Rahmen bilden. Diese Querbalken würden bei einer bekannten Verarbeitung in einer Doppelbandanlage mit Kunststoffgemisch benetzt, so daß hier ein nicht erwünschter Materialauftrag und eine zumindest in dieser Weise nicht erwünschte Verklebung erfolgen würde.

Der Erfindung liegt nun die Aufgabe zugrunde, ein Verfahren und eine Vorrichtung der eingangs genannten Art zu schaffen, durch die die kontinuierliche Herstellung von Kassetten mit Hilfe einer Doppelbandanlage möglich ist.

Diese Aufgabe wird grundsätzlich durch das Kennzeichen des Anspruchs 1 gelöst. Zweckmäßige Weiterbildungen des erfindungsgemäßen Verfahrens sind Gegenstand der Ansprüche 2 bis 5. Die Ansprüche 6 und 7 sind auf entsprechende Vorrichtungen zur Durchführung der einzelnen Verfahren gerichtet.

Erfindungsgemäß werden die Kassetten nicht mehr diskontinuierlich in einer Presse sondern kontinuierlich in einem Doppelband hergestellt. Zu diesem Zweck werden die Kassetten vorher zusammengestellt und durch einen Vorförderer dem Doppelband kontinuierlich zugeführt. Vor dem Eintritt in das Doppelband passieren sie die Beschichtungsstation mit dem Mischkopf. Die Kassetten liegen bereits auf der unteren Deckschicht auf und stoßen mit ihren Querbalken aneinander bzw. weisen zwischen den Querbalken einen geringen Abstand auf, der eine spätere Trennung an dieser Stelle ermöglicht. Die Düse, die man auch als Austrittsrohr der Mischvorrichtung bezeichnen kann, ist nun bei einer vorteilhaften Ausführungsform gegen die Transportrichtung des Doppelbandes schnell bewegbar, entweder schwenkbar (Anspruch 3) oder linear bewegbar (Anspruch 4), so daß beim Passieren eines Querbalkens der austretende Schaumstrahl abreißt und bereits hierdurch ein Schaumauftrag auf den Querbalken verhindert wird. Nachdem der Querbalken durchgelaufen ist, kehrt die Düse langsam wieder in ihre Ausgangsstellung zurück. Die Schutzabdeckung stellt dann sicher, daß auch keine geringfügige Benetzung des Querbalkens erfolgt. Bei einer anderen Ausführungsform wird der Schaumaustrag unterbrochen, in diesem Fall wird die Schutzabdeckung synchron in Transportrichtung des Doppelbandes beim Passieren eines Querbalkens mitbewegt und anschließend in die Ausgangsstellung zurückbewegt. Bei dieser Ausführungsform steht die Düse in Bezug auf die Transportrichtung still, so daß die Schutzabdeckung mitbewegt wird. Eine derartige Unterbrechung läßt sich in vorteilhafter Weise mit bekannten Mischvorrichtungen mit Steuerkolben durchführen.

Durch die Erfindung wird also sichergestellt, daß eine kontinuierliche Arbeitsweise möglich ist, ohne daß die Querbalken des Rahmens mit Mehrkomponentenmaterial benetzt werden.

Die Schutzabdeckung kann in der unterschiedlichsten Weise ausgestaltet sein, wobei gegebenenfalls ein Trennmittelauftrag erfolgen kann, damit eine leichte Reinigung möglich ist. Es ist auch möglich, eine Papierabdeckung für die Schutzabdeckung vorzusehen, die nach entsprechender Verschmutzung entfernt wird.

Im folgenden wird die Erfindung unter Hinweis auf die Zeichnung anhand verschiedener Ausführungsbeispiele näher erläutert.

Es zeigt:

Fig. 1    eine Draufsicht und einen Querschnitt einer Kassette, die durch das Verfahren nach der Erfindung hergestellt wird;

Fig. 2    eine schematische Seitenansicht einer Doppelbandanlage mit den ihr vorge-

Fig. 3 einen Querschnitt und zwei Ansichten eines Längsschnitts zur Veranschaulichung einer Ausführungsform mit Schwenkdüse;

Fig. 4 eine der Fig. 3 entsprechende Ansicht, jedoch mit linear in Transportrichtung bewegbarer Düse;

Fig. 5 eine schematische Seitenansicht einer Ausführungsform in drei Stellungen mit einer Schaumaustrittsunterbrechung beim Passieren eines Querbalkens;

Fig. 6 eine Draufsicht auf eine Ausführungsform einer synchron mit dem Doppelband mitbewegbaren Schutzabdeckung für eine in Bezug auf die Transportrichtung stillstehende Düse;

Fig. 7 eine Draufsicht auf eine Ausführungsform mit einer seitlich ein- und ausfahrbaren Schutzabdeckung; und

Fig. 8 eine Draufsicht auf eine Ausführungsform mit einer seitlich ein- und ausdrehbaren Schutzabdeckung.

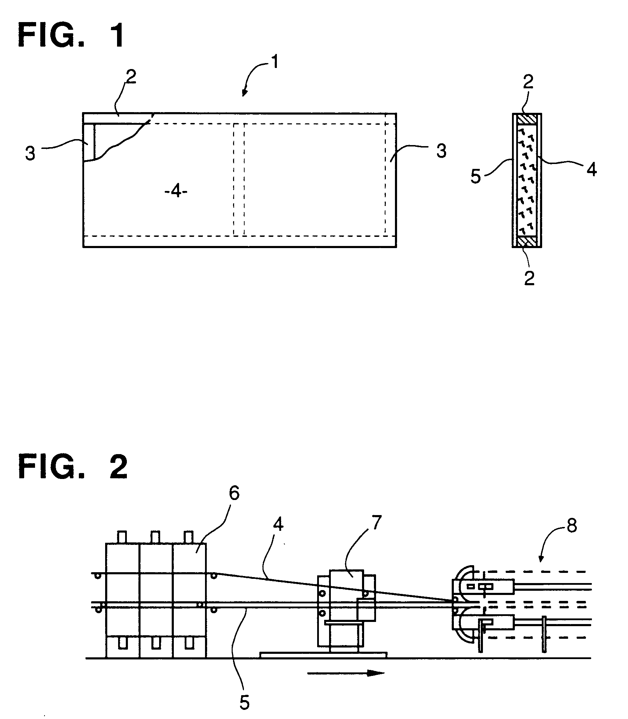

Die in Fig. 2 schematisch dargestellte Vorrichtung, bei der es sich um eine sog. Doppelbandanlage 8 handelt, dient der Herstellung von geschlossenen Kassetten, wie eine in Fig. 1 dargestellt ist. Diese Kassettte 1 besteht aus einem Rahmen mit zwei Seitenbalken 2 und zwei Querbalken 3, wobei ggf. noch weitere Versteifungsquerbalken vorgesehen sein können. Oben und unten wird die Kassette durch eine obere Deckschicht 4 und eine untere Deckschicht 5 abgedeckt. Hierbei kann es sich um feste oder flexible Deckschichten aus den verschiedensten Werkstoffen wie Holz, Metall und Kunststoff, handeln.

Der in Fig. 2 dargestellten Doppelbandanlage 8 ist eine Beschichtungsstation 7 mit der Mischvorrichtung vorgeschaltet. Wiederum der Beschichtungsstation 7 vorgeschaltet ist eine Einrichtung 6 zum Entstapeln und Aufgeben der Kassetten sowie zum Zuführen der oberen und unteren Deckschichten 4 und 5.

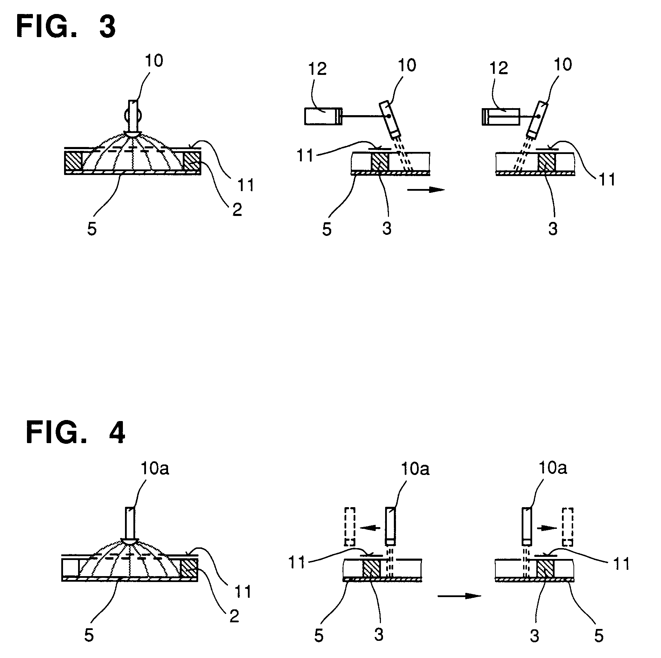

In Fig. 3 ist links eine Kassette 1 im Querschnitt dargestellt. Die Seitenbalken 2 und die untere Deckschicht 5 sind erkennbar. Die Darstellung zeigt den Bereich der Beschichtungsstation, so daß die obere Deckschicht 4 noch nicht zugeführt ist. Die am Austritt der Mischvorrichtung sitzende Düse 10 ist eine Breitschlitzdüse, die für eine Benetzung über die gesamte Breite der Kassette sorgt. Die Schutzabdeckung ist mit 11 bezeichnet.

Rechts in Fig. 3 sind zwei Längsschnitte schematisch dargestellt, um die Schwenkbewegung der Düse 10 beim Passieren eines Querbalkens 3 deutlich zu machen. Diese Schwenkbewegung erfolgt mit Hilfe eines pneumatischen Zylinders 12 und zwar so schnell, daß der austretende Schaumstrahl abreißt und so im wesentlichen eine Benetzung des Querbalkens 3 vermieden wird. Die Schutzabdeckung 11 stellt sicher, daß der Querbalken 3 auf jeden Fall nicht mit austretendem Kunststoffmaterial in Berührung gelangt.

Die Ausführungsform nach Fig. 4 unterscheidet sich dadurch von derjenigen nach Fig. 3, daß die Düse 10a nicht schwenkbar sondern linear gegen die Transportrichtung des Kassettenstranges bewegbar ist. Auch diese Bewegung erfolgt so schnell, daß der austretende Gemischstrang abreißt.

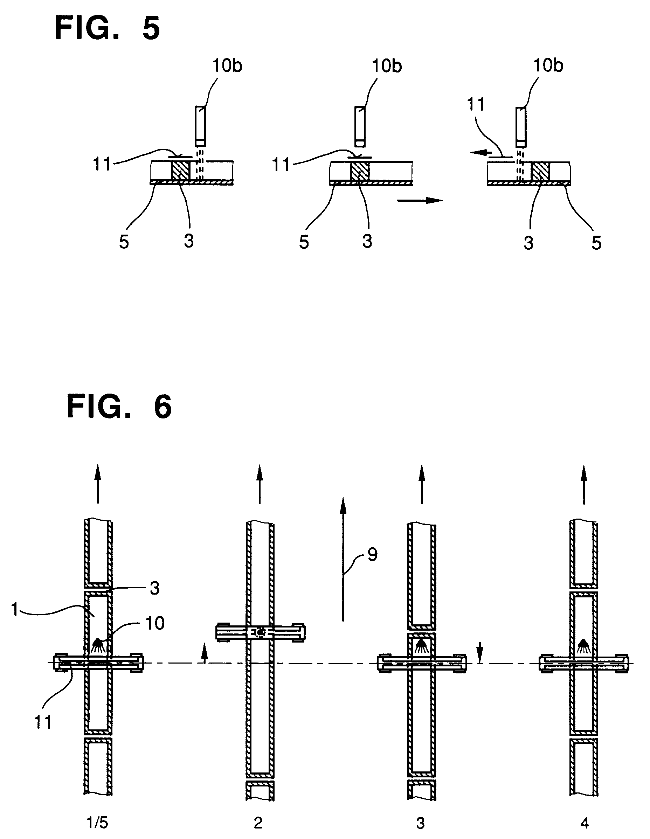

Bei der Ausführungsform nach Fig. 5, die drei Stellungen im Querschnitt zeigt, wird die Düse 10b nicht gegen die Transportrichtung bewegt, um für ein Abreißen des austretenden Schaumstrahles zu sorgen. Bei diesem Mischkopf erfolgt zwangsweise eine Unterbrechung, wie in der mittleren Darstellung der Fig. 5 angedeutet ist. Da die Düse 10b bei dieser Ausführungsform in Bezug auf die Transportrichtung stillsteht, muß die Schutzabdeckung 11 beim Passieren eines Querbalkens 3 synchron mitbewegt werden. Nach dem Passieren durch den Querbalken wird die Schutzabdeckung 11 in ihre Ausgangsstellung zurückbewegt, ohne daß hierbei der Eintrag des Schaumes in die Kassette behindert wird. Diese Bewegung der Schutzabdeckung 11 ist in Fig. 6 in den Phasen 1 bis 5 in Draufsicht dargestellt, wobei die Phase 5 der Phase 1 entspricht.

Bei dieser Ausführungsform wird die Schutzabdeckung 11 durch ein quer zur Transportrichtung des Doppelbandes umlaufendes Kunststoffband, ggf. mit Trennmittelauftrag oder Papierabdeckung, gebildet. Die Transportrichtung des Doppelbandes 8 ist durch einen Pfeil 9 angedeutet.

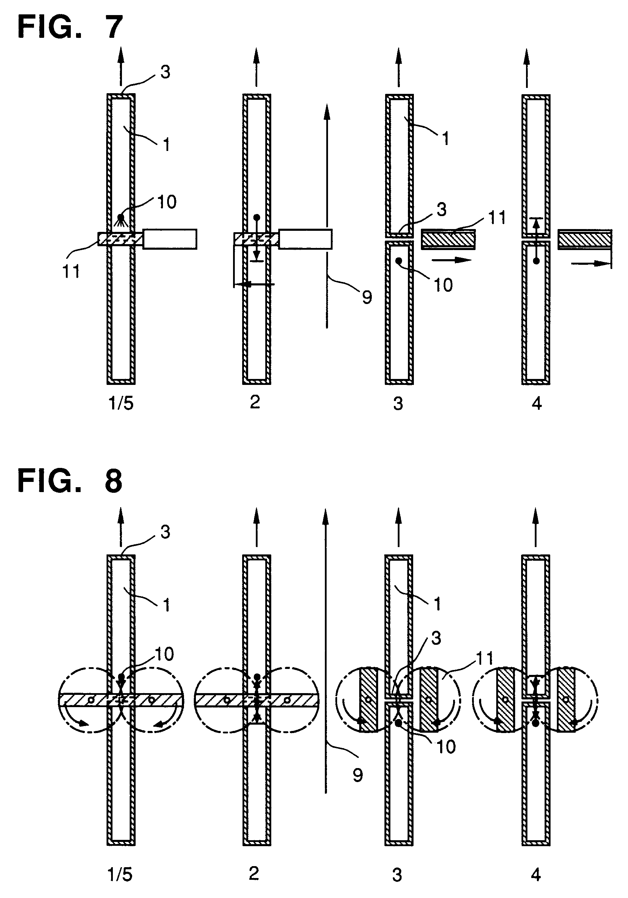

In Fig. 7 ist eine Schutzabdeckung 11 dargestellt, die aus einem seitlich ein- und ausfahrbaren Schwert besteht. In den Phasen 1 und 5 wird der Querbalken bzw. werden zwei Querbalken abgedeckt. In den Phasen 3 und 4 ist das Schwert zurückgezogen, so daß der Austritt des Schaumstrahles aus der Düse 10 nicht behindert wird.

Anstelle des Ein- und Ausfahrens ist es auch denkbar, daß das Schwert hochschwenkbar ist, um den Austritt des Schaumstrahles bei dem normalen Eintragvorgang nicht zu behindern.

Bei der Ausführungsform nach Fig. 8 sind zwei seitlich angeordnete Schwerter erkennbar, die die Schutzabdeckung 11 bilden und drehbar gelagert sind, um entweder ein oder zwei Querbalken abzudecken bzw. den Kasetteninnenraum zum Schaumeintrag freizugeben.

Die Schutzabdeckungen der Ausführungsformen nach den Fig. 6, 7 und 8 sind grundsätzlich für sämtliche Ausführungsformen nach den Fig. 3, 4 und einsetzbar, wobei im Falle der Ausführungsform nach Fig. 5 für eine entsprechende zusätzliche synchrone Bewegung der Schutzabdeckung in Transportrichtung gesorgt werden muß.

**Patentansprüche**

1. Verfahren zum Ausschäumen von geschlossenen Kassetten mit einem Mehrkomponenten-Kunststoff, insbesondere Polyurethan, wobei die Kassetten (1) durch einen festen Rahmen (2, 3) und eine obere und untere flexible oder feste Deckschicht (4, 5) gebildet sind, und der Schaumeintrag in die Kassette durch eine Düse (10) einer Mischvorrichtung erfolgt, dadurch gekennzeichnet, daß die Kassette (1) nach dem Schaumeintrag durch die Düse (10) und dem Zuführen der Deckschichten (4, 5) kontinuierlich zum Aufschäumen durch ein an sich bekanntes Doppelband (8) transportiert werden, und daß der Schaumeintrag und/oder -austritt beim Passieren der Düse (10) durch einen Querbalken (3) des Rahmens (1) unterbrochen und durch eine Schutzabdeckung (11) abgedeckt wird.

2. Verfahren nach Anspruch 1, dadurch gekennzeichnet, daß die Düse (10) beim Passieren durch einen Querbalken (3) gegen die Transportrichtung des Doppelbandes (8) derart bewegt wird, daß der aus ihr austretende Schaumstrahl abreißt.

3. Verfahren nach Anspruch 2, dadurch gekennzeichnet, daß die Bewegung der Düse (10) eine Schwenkbewegung ist.

4. Verfahren nach Anspruch 2, dadurch gekennzeichnet, daß die Bewegung der Düse (10) eine lineare Bewegung ist.

5. Verfahren nach Anspruch 1, dadurch gekennzeichnet, daß die Düse (10) in Bezug auf die Transportrichtung des Doppelbandes (8) ortsfest angeordnet ist, und der Austritt des Schaums beim Passieren durch einen Querbalken (3) unterbrochen wird, und daß die Schutzabdeckung (11) während des Passierens durch einen Querbalken (3) in Transportrichtung des Doppelbandes synchron mit dem Querbalken (3) mit- und anschließend zurückbewegt wird.

6. Vorrichtung zur Durchführung des Verfahrens nach einem oder mehreren der vorstehenden Ansprüche 1 bis 5, dadurch gekennzeichnet, daß die Schutzabdeckung (11) durch ein quer zur Transportrichtung des Doppelbandes (8) bewegbares Abdeckband, ggf. mit einer Einrichtung zum Trennmittelauftrag, gebildet ist (Fig. 6).

7. Vorrichtung nach einem oder mehreren der vorstehenden Ansprüche 1 bis 5, dadurch gekennzeichnet, daß die Schutzabdeckung (11) durch ein oder zwei hochschwenkbare oder seitlich ausfahrbare bzw. wegdrehbare Abdeckschwerter gebildet ist (Fig. 7 oder 8).

# FIG. 1

# FIG. 2

# FIG. 3

# FIG. 4

# FIG. 5

# FIG. 6

1/5                        2                        3                        4

# FIG. 7

1/5    2    3    4

# FIG. 8

1/5    2    3    4